Europäisches Patentamt

**European Patent Office**

Office européen des brevets

(11) Numéro de publication: **0 127 520**
**B1**

(12) # FASCICULE DE BREVET EUROPÉEN

(45) Date de publication du fascicule du brevet:
25.11.87

(51) Int. Cl.⁴: **F 23 C 3/00**, F 23 C 6/04

(21) Numéro de dépôt: **84400993.6**

(22) Date de dépôt: **16.05.84**

(54) **Dispositif pour réaction à haute température.**

(30) Priorité: **20.05.83 FR 8308394**

(43) Date de publication de la demande:
**05.12.84 Bulletin 84/49**

(45) Mention de la délivrance du brevet:
**25.11.87 Bulletin 87/48**

(84) Etats contractants désignés:
**AT BE CH DE FR GB IT LI LU NL SE**

(56) Documents cité:
**EP-A-0 007 846**
**EP-A-0 012 461**
**EP-A-0 048 664**
**EP-A-0 073 265**
**CH-A-450 604**
**DE-A-2 317 024**
**FR-A-1 070 017**
**FR-A-2 046 784**
**US-A-4 060 376**
**US-A-4 382 771**

(73) Titulaire: **RHONE- POULENC CHIMIE, 25, quai Paul Doumer, F-92408 Courbevoie** Cédex (FR)

(72) Inventeur: **Bernard, Philippe, 71, rue Balliard, F-75018 Paris (FR)**
Inventeur: **Prudhon, François, 2, rue Delaunay, F-78000 Versailles (FR)**

(74) Mandataire: **Dubruc, Philippe, RHONE- POULENC INTERSERVICES Service Brevets Chimie 25, quai Paul- Doumer, F-92408 Courbevoie Cédex (FR)**

LIBER, STOCKHOLM 1987

## 0 127 520

**Description**

La présente invention a trait à un dispositif pour la génération de gaz chauds en réalisant un écoulement hélicoïdal symétrique.

Il permet également la génération de gaz à haute température dans un dispositif selon l'EP-A-7846 par application des propriétés d'un écoulement puits-tourbillon au traitement d'une phase pulvérisable.

Le dispositif selon l'invention comprend, en combinaison:
- une chambre de réaction (1) formée d'un corps creux présentant une paroi interne (4) à symétrie de rotation telle que cylindrique,
- un système d'alimentation d'au moins un réactif sous forme gazeuse qui comprend un espace annulaire (5) entourant la chambre de réaction alimenté par des tubulures (10), ledit espace communiquant avec la chambre de réaction par des conduits (6) débouchant tangentiellement, de manière à introduire ladite phase gazause à l'intérieur de la chambre de réaction sous forme d'un écoulement hélicoïdal symétrique,
ledit dispositif étant caractérisé par le fait qu'il comprend des moyens de refroidissement (7) ménagés entre l'espace annulaire et la chambre de réaction (1).

Selon une forme de réalisation préférentielle de l'invention, le dispositif présente également des moyens de refroidissement (8) dans le fond du réacteur.

Les moyens de refroidissement (7) peuvent être constitués par une double enveloppe ou un système de distribution alimentant un ensemble de canaux (9) de refroidissement creusés dans la masse même du dispositif.

Le dispositif selon l'invention peut également présenter un moyen d'alimentation d'au moins un réactif sous forme liquide, selon l'axe de symétrie de rotation.

Le système d'alimentation du ou des réactifs sous forme gazeuse est, de manière simple, constitué par des tores de distribution.

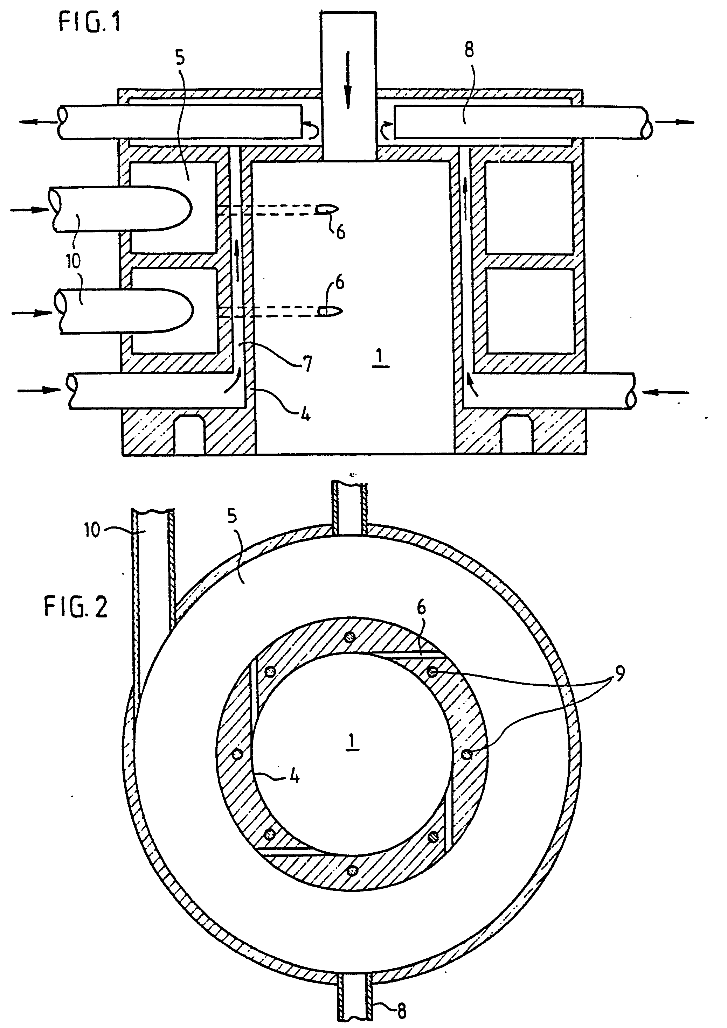

Des dispositifs sont illustrés aux figures 1 et 2, représentant un appareillage à chambre de réaction (1) cylindrique, avec refroidissement par canaux (9), figure 2.

Le dispositif selon l'invention peut être utilisé pour mettre en oeuvre le procédé selon la demande de brevet français publié sous le numéro 2 276 086 qui revendique une combustion dans la zone en dépression relative d'un écoulement hélicoïdal symétrique.

On sait que ce procédé permet la réalisation d'un dispositif à paroi froide avec un gaz chaud, mais est néanmoins limité dans son emploi vers les hautes températures lorsque l'on veut mettre en oeuvre un procédé selon l'EP-A-7846 qui consiste à faire, in situ, la génération des gaz chauds dans une première zone en imposant aux dits gaz la forme d'un écoulement puits-tourbillon et à introduire une matière à traiter, sous forme d'une phase axiale, dans la zone en dépression relative de cet écoulement, de manière à provoquer la rupture de la phase axiale, la prise en charge de chaque élément de volume transformé et son traitement par un élément de volume gazeux associé.

Le dispositif selon l'invention, à parois refroidies, peut avantageusement être mis en oeuvre, selon le dispositif décrit dans l'EP-A-7846, pour former un appareillage qui comporte une chambre de réaction, notamment de combustion et une chambre de mise en contact, selon lequel la chambre de réaction se termine en aval par un convergent dans lequel aboutit, selon l'axe de rotation de la chambre de réaction, un dispositif d'injection sensiblement au niveau d'un passage restreint, la chambre de mise en contact prolongeant en aval la chambre de réaction selon le même axe de rotation.

Il est économiquement avantageux que la phase gazeuse, formant dans chaque cas l'écoulement hélicoïdal symétrique, soit introduite sous faible pression.

La différence entre la pression de la phase formant l'écoulement hélicoïdal symétrique et la pression régnant directement en aval du passage restreint est de préférence inférieure à $10^5$ Pa lorsque ladite pression est voisine de la pression atmosphérique.

Grâce au dispositif selon l'invention, les gaz, à la sortie de la chambre de combustion, peuvent être portés à une température comprise entre 1000 et 2500°C et même au-delà.

De ce fait, le champ d'application s'en trouve élargi d'autant et permet notamment d'aborder un domaine normalement réservé aux techniques avec plasma.

Par ailleurs, on peut associer, de manière non limitative:
- un refroidissement à la sortie de la chambre de contact,
- plusieurs chambres de contact en série avec ou sans traitement complémentaire.

On peut aussi prévoir, à la sortie de la chambre de mise en contact, une zone de mise en rotation qui, de manière simple, est statique.

On réalise, de la sorte, un système de mise hors poussière.

On peut aussi prévoir des moyens d'injection d'une phase liquide et/ou gazeuse permettant d'introduire un liant ou de réaliser un effet de trempe. On peut aussi réaliser un ou plusieurs recyclages et l'introduction simultanée de plusieurs phases, notamment sous forme d'une co-pulvérisation.

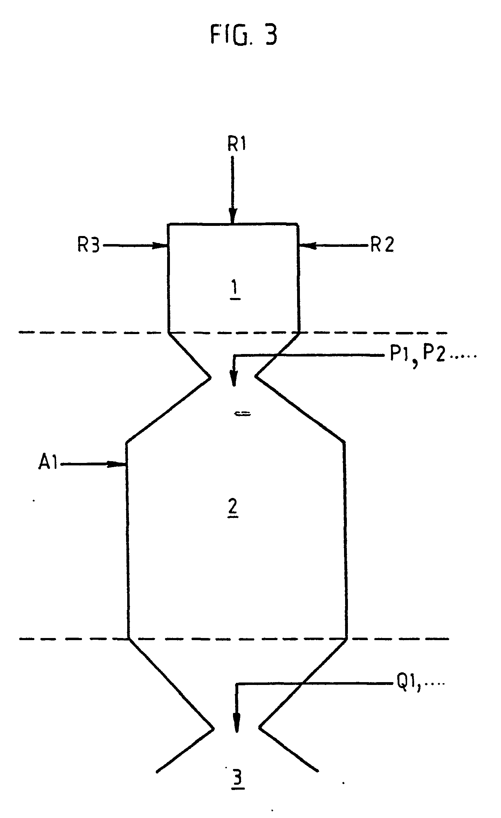

On a illustré, au tableau ci-après et à la figure 3 ci-annexée, diverses possibilités d'utilisation du dispositif (1) selon l'invention, les chambres (2) et (3) étant des zones de contact autres que des zones de trempe.

Dans le tableau, les zones de trempe éventuelles n'ont pas été mentionnées.

Ce tableau, qui ne prétend être ni exhaustif, ni limitatif, montre la souplesse du dispositif qui lui permet de toucher à un vaste champ d'application.

2

**0 127 520**

En particulier, les débits $P_1$ (et $P_2$...) (figure 3 ci-annexée) peuvent être constitués de solvants chlorés, par exemple résiduaires, en utilisant les combinaisons suivantes de $R_1$, $R_2$, etc...

1) $R_1 =$ HC gazaux (HC = Hydrocarbure)
$R_2 =$ air (primaire) de combustion de $R_1$
$R_3 =$ air (secondaire) de combustion de $P_1$ (et $P_2$...)

2) $R_1 =$ HC gazeux, en $H_2$
$R_2 =$ chlore
$R_2 =$ étant en excès si l'on veut provoquer une réaction de chloration de $P_1$ etc...

## Dispositif constitue de

| Chambre 1 | Chambres 1 et 2 | Chambres 1, 2 et 3 |
|---|---|---|
| $R_1 = H_2$ | $R_1 = H_2$ | $R_1 =$ HC gazeux |
| $R_2 =$ air et/ou $O_2$ | $R_2 =$ air et/ou $O_2$ | $R_2 =$ air et/ou $O_2$ excès |
| $R_3 = H_2O$ vapeur (éventuellement) | $P_1 =$ HC liquide et/ou charbon en suspension | $P_1 =$ HC liquide |
| Génération de gaz chauds et/ou production de vapeur d'eau surchauffée | $P_2 =$ additif de combustion (éventuellement) | $A_1 =$ air et/ou $O_2$ en excès |
| $R_1 =$ HC gazeux ou liquide | $A_1 = O_2$ et/ou air (excès) | $Q_1 =$ a) solutions ou suspensions minérales séchage ou concentration de produits minéraux |
| $R_2 =$ air et/ou oxygène | Génération de gaz chauds par combustion propre | b) eaux résiduairres dépollution |
| Génération de gaz chauds | $R_1 = H_2$ (éventuellement en excès) ou HC gazeux | |
| $R_1 =$ HC gazeux | $R_2 = O_2$ | |
| $R_2 = O_2$ en défaut | $R_3 = H_2O$ vapeur | |
| $R_3 = CO_2$ et/ou $H_2O$ (éventuellement) | (éventuellement) | |
| Production de $C_2H_2$ et/ou de gaz de synthèse et d'HC craqués | $P_1 =$ HC liquide | |
| | Hydrovapocraquage | |
| | $R_1 = H_2$ ou HC gazeux | |
| | $R_2 = O_2$ | |
| | $R_3 = H_2O$ vapeur et/ou $CO_2$ (éventuellement) | |
| | $P_1 = C$ en suspension | |
| | $A_1 = H_2O$ vapeur et/ou $CO_2$ (éventuellement) | |
| | Gazeification du charbon) | |
| | $R_1 = H_2$ | |
| | $R_2 = Cl_2$ | |
| | $P_1 = H_2O$ (éventuellement) | |
| | Production de HCl gazeux et/ou en solution | |
| | $R_1 = H_2$ | |
| | $R_2 = Cl_2$ en excès | |
| | $P_1 =$ HC liquide | |
| | Chloration directe d'HC en solvants chlorés | |

HC = Hydrocarbure

## Revendications

1. Dispositif pour la génération de gaz dont la température est comprise entre 1000 et 2500°C, qui comprend en combinaison:
- une chambre de réaction (1) formée d'un corps creux présentant une paroi interne (4) à symétrie de rotation telle que cylindrique,
- un système d'alimentation d'au moins un réactif sous forme gazeuse qui comprend un espace annulaire (5) entourant la chambre de réaction alimenté par des tubulures (10), ledit espace communiquant avec la chambre de réaction par des conduits (6), débouchant tangentiellement, de manière à introduire ladite phase gazeuse à l'intérieur de la chambre de réaction sous forme d'un écoulement hélicoïdal symétrique,

3

0 127 520

ledit dispositif étant caractérisé par le fait qu'il comprend des moyens de refroidissement (7) ménagés entre l'espace annulaire (5) et la chambre de réaction (1).

2. Dispositif selon la revendication 1, caractérisé par le fait qu'il présente des moyens de refroidissement dans le fond du réacteur (8).

3. Dispositif selon l'une des revendications 1 et 2, caractérisé par le fait qu'il présente un moyen d'alimentation d'au moins un réactif sous forme liquide.

4. Dispositif selon l'une quelconque des revendications 1 à 3 caractérisé par le fait qu'il comprend une chambre de mise en contact (2) et par le fait que la chambre de réaction se termine en aval par un convergent dans lequel aboutit, selon l'axe de rotation de la chambre de réaction, un dispositif d'injection sensiblement au niveau du passage restreint formé par le convergent, la chambre de mise en contact prolongeant en aval la chambre de réaction selon le même axe de rotation.

5. Dispositif selon la revendication 4, caractérisé par le fait qu'il comprend plusieurs chambres de contact en série.

6. Application du dispositif selon l'une des revendications 1 à 5 à la production d'acide chlorhydrique gazeux.

7. Application du dispositif selon l'une des revendications 1 à 5 à la production d'acide chlorhydrique en solution.

8. Application du dispositif selon l'une des revendications 1 à 5 à la chloration directe d'hydrocarbures en solvants chlorés.

9. Application du dispositif selon l'une des revendications 1 à 5 à la gazéification du charbon.


**Patentansprüche**

1. Vorrichtung für die Erzeugung von Gas bzw. gasförmigen Produkten mit einer Temperatur von 1000 bis 2500°C, bestehend aus:
- einer Reaktionskammer (1) in Form eines rotationssymmetrischen, beispielsweise zylindrischen, Hohlkörpers mit einer Innenwand (4),
- einem System zur Einspeisung mindestens eines gasförmigen Reaktionspartners, umfassend einen Ringraum (5), der die Reaktionskammer umgibt und über Rohrstutzen (10) gespeist wird und der mit der Reaktionskammer über Leitungen (6) in Verbindung steht, die tangential einmünden, so daß die Gasphase in Form einer symmetrischen schraubenförmigen Strömung in die Reaktionskammer eingebracht wird, dadurch gekennzeichnet, daß die Mittel zum Abkühlen (7) umfaßt, die zwischen dem Ringraum (5) und der Reaktionskammer (1) angeordnet sind.

2. Vorrichtung nach Anspruch 1, dadurch gekennzeichnet, daß die Mittel zum Abkühlen aufweist im Boden des Reaktors (8).

3. Vorrichtung nach einem der Ansprüche 1 und 2, dadurch gekennzeichnet, daß sie ein Mittel zum Einspeisen mindestens eines flüssigen Reaktionspartners aufweist.

4. Vorrichtung nach einem der Ansprüche 1 bis 3, dadurch gekennzeichnet, daß sie eine Kontaktkammer (2) aufweist und die Reaktionskammer nach unten in einem konvergierenden Bereich endet, in den entsprechend der Rotationsachse der Reaktionskammer eine Injektionsvorrichtung im wesentlichen auf der Höhe der durch den konvergierenden Bereich gebildeten Einschnürung mündet, und die Kontaktkammer die Reaktionskammer entlang derselben Rotationsachse nach unten verlängert.

5. Vorrichtung nach Anspruch 4, dadurch gekennzeichnet, daß sie mehrere hintereinander angeordnete Kontaktkammern umfaßt.

6. Anwendung der Vorrichtung nach einem der Ansprüche 1 bis 5 zur Erzeugung von Chlorwasserstoff.

7. Anwendung der Vorrichtung nach einem der Ansprüche 1 bis 5 zur Herstellung von Salzsäure.

8. Anwendung der Vorrichtung nach einem der Ansprüche 1 bis 5 zur direkten Chlorierung von Kohlenwasserstoff zu chlorierten Lösungsmitteln.

9. Anwendung der Vorrichtung nach einem der Ansprüche 1 bis 5 zur Kohlevergasung.


**Claims**

1. Apparatus for generating gases whose temperature is between 1000 and 2500°C, comprising in combination:
- a reaction chamber (1) formed by a hollow body having a rotationally symmetrical internal wall (4) such as a cylindrical wall,
- a system for supplying at least one reactant in gaseous form which comprises an annular space (5) surrounding the reaction chamber and supplied by way of pipes (10), said space communicating with the reaction chamber by way of tangentially opening conduits (6) so as to introduce said gaseous phase into the interior of the reaction chamber in the form of a symmetrical helicoidal flow,

4

**0 127 520**

said apparatus being characterised in that it comprises cooling means (7) disposed between the annular space (5) and and the reaction chamber (1).

2. Apparatus acording to claim 1 characterised in that it has cooling means in the bottom of the reactor (8).

3. Apparatus according to one of claims 1 and 2 characterised in that it has a means for supplying at least one reactant in liquid fform.

4. Apparatus according to any one of claims 1 to 3 characterised in that it comprises a contacting chamber (2) and that the reaction chamber is terminated downstream by a convergent portion into which an injection device opens, along the rotational axis of the reaction chamber, substantially at the location of the restricted passage formed by the convergent portion, the contacting chamber extending the reaction chamber in a downstream direction along the same rotational axis.

5. Apparatus according to claim 4 characterised in that it comprises a plurality of contacting chambers in series.

6. Use of the apparatus according to one of claims 1 to 5 for the production of gaseous hydrochloric acid.

7. Use of the apparatus according to one of claims 1 to 5 for the production of hydrochloric acid in solution.

8. Use of the apparatus according to one of claims 1 to 5 for the direct chlorination of hydrocarbons to give chlorinated solvents.

9. Use of the apparatus according to one of claims 1 to 5 for the gasification of coal.

6. Use of the apparatus according to one of claims 1 to 5 for the production of gaseous hydrochloric acid.

7. Use of the apparatus according to one of claims 1 to 5 for the production of hydrochloric acid in solution.

8. Use of the apparatus according to one of claims 1 to 5 for the direct chlorination of hydrocarbons to gire chlorinated solvents.

9. Use of the apparatus according to one of claims 1 to 5 for the gasification of coal.

5

FIG.1

FIG. 2

FIG. 3